# EUROPÄISCHE PATENTANMELDUNG

(11) **EP 1 383 069 A1**
(43) Veröffentlichungstag der Anmeldung: **21.01.2004**
(21) Anmeldenummer: 03405424.7
(22) Anmeldetag: 12.06.2003
(51) Int. Cl.: G06F 17/60

(54) **Verfahren und Vorrichtung zur Vermittlung von Information über ein Angebot an einen Interessenten**

(30) Priorität: 01.07.2002 CH 11402002
(71) Anmelder: Kalbermatten, Alex, 1950 Sion (CH); Schöpfer, Roger, 1967 Bramois (CH)
(72) Erfinder: Kalbermatten, Alex, 1950 Sion (CH); Schöpfer, Roger, 1967 Bramois (CH)

(57) **Zusammenfassung**

Verfahren und Vorrichtung zur Vermittlung von Information über ein Angebot 3 an einen Interessenten 6, insbesondere von Information über den Verkauf oder die Vermietung von Immobilien, Grundstücken oder Verkauf von Fahrzeugen. Das Verfahren und die entsprechende Vorrichtung sehen vor, dass ein am Ort des Angebots 3 oder ein auf dem Angebot 3 angebrachter Informationsträger 4 mittels Angebotsnummer mit einer vom Dienstanbieter 5 betriebenen Datenbank 1 in Zusammenhang steht, wobei der Informationsträger 4 zusätzlich einen integrierten RFID Transponder 9 beinhalten kann. Dem Interessenten 6 wird mittels eines ans Festnetz oder Mobilfunknetz angeschlossenes Endgerät Zugang zur Information über das Angebot 3 in der Datenbank 1 des Dienstanbieters 5 ermöglicht, Information welche vorgängig durch den Anbieter 2 mit einem an das Telekommunikationsnetz angeschlossenes Endgerät in die Datenbank 1 des Dienstanbieters 5 eingegeben wird.

## Beschreibung

Die vorliegende Erfindung betrifft ein Verfahren zur Vermittlung von Information über ein Angebot an einen Interessenten, insbesondere von Information über den Verkauf oder die Vermietung von Immobilien, Grundstücken oder den Verkauf von Fahrzeugen, und eine dementsprechende Vorrichtung.

Information und Massnahmen zum Verkaufen oder Vermieten von Immobilien, Grundstücken oder Fahrzeugen werden heute über jedes verfügbare Medium an den Interessenten herangetragen. Ein wesentlicher Teil von Zeitungen, sowie weite Teile des Internets finanzieren sich mittlerweile durch die mit derartiger Werbung erzielten Einnahmen. Dementsprechend sind diese Möglichkeiten der Informationsübermittlung bei Interessenten und Kunden der genannten Medien weitgehend ausgeschöpft.

Es ist daher Aufgabe der vorliegenden Erfindung, ein Verfahren und eine dementsprechende Vorrichtung für eine alternative Vermittlung von Information über ein Angebot an potentielle Kunden zu schaffen.

Diese Aufgabe wird erfindungsgemäss durch ein Verfahren und durch eine Vorrichtung mit den Merkmalen und Vorteilen gelöst, welche sich aus den Ansprüchen ergeben. Vorteilhafte Weiterbildungen der Erfindung sind Gegenstand der jeweiligen Unteransprüche.

Ein erfindungsgemässes Verfahren sieht vor, dass ein am Ort des Objektes oder ein auf dem angebotenen Objekt angebrachter Informationsträger, als sogenannter Blickfang, mittels erfindungsspezifischer Anordnung einer Angebotsnummer mit einer vom Dienstanbieter betriebenen Datenbank in Zusammenhang steht. Als Teil einer solchen Datenbank ist der Informationsträger zur Vermittlung von Information an den Interessenten mit einer Angebotsnummer und den Kontaktangaben zum Dienstanbieter ausgebildet, die am Standort des angebotenen Objektes angezeigt werden. In einer Weiterbildung der Erfindung kann man sich auch vorstellen, dass der Informationsträger zudem einen RFID-Transponder beinhaltet. Somit kann der Anbieter Information der genannten Art beim Dienstanbieter mittels Datenbank jederzeit zum Abruf durch den Interessenten bereithalten, welcher am Ort oder am angebotetenen Objekt selbst den angebrachten Informationsträger erkennen kann und nach Uebermittlung der Angebotsnummer über das Festnetz durch ein Endgerät, wie zum Beispiel ein Computer, oder mittels Mobilfunkendgerät über das Mobilfunknetz, oder gegebenfalls auch durch RFID-Identifikationstechnik, die auf der drahtlosen Uebertragung von Daten zwischen einem Datenträger und einem Empfänger basiert, direkten Zugang zur detaillierten Information des von ihm besichtigten Angebots erhält. Die Versendung über ein verteiltes und damit weit verzweigtes Netz der Telekommunikation wie das Internet oder das Mobiltelefonnetz, schafft eine hohe Geschwindigkeit bei guter Ausfallsicherheit, wobei neben der elektronischen Erstellung der Information im Vergleich zu herkömmlichen Verfahren keine nennenswerten Kosten hinzutreten. Druck- und Versandkosten entfallen damit gemäss vorliegender Erfindung, insbesondere bei der Datenerfassung durch den Anbieter, sowie bei der Datenabfrage durch den Interessenten.

Die Vorrichtung kann die äusserliche Form eines herkömmlichen Blickfangs haben wie zum Beispiel ein Aufkleber, Sticker, Werbetafel, Werbeplakat, Hängeschild, Magnettafel, usw., sieht aber erfindungsgemäss vor, dass der Informationsträger mit einer Anzeigeanordnung versehen ist bestehend aus einer Angebotsnummer und den Kontaktatangaben des Dienstanbieters. Diese Anzeigeordnung kann in einer der möglichen Ausführungsformen auch ohne die bei den herkömmlichen Blickfangen übliche und sehr platzeinnehmende Beschriftung 'zu verkaufen' oder 'zu vermieten' auskommen, um damit mehr Platz auf dem Informationsträger zu schaffen für eine gut erkennbare und weit sichtbare Angebotsnummer und Kontaktangaben des Dienstanbieters. Die herkömmliche Beschriftung 'zu verkaufen' oder 'zu vermieten' erübrigt sich erfindungsgemäss dadurch, dass eine auf dem Informationsträger aufgeführte Angebotsnummer mit einer vom Dienstanbieter betriebenen Datenbank in Zusammenhang steht und diese eine fortlaufende Seriennummer beinhaltet mit kodifizierten Angebotsstatus wie zum Beispiel 'verkauf89474' oder 'vermietung76439'. Was dem Interessenten genügend Aufschluss gibt zu wissen, ob es sich um einen Verkauf oder um eine Vermietung des Angebots handelt. Es ist aber auch vorstellbar, dass dieses Ausführungsbeispiel keine Anwendung findet und die Angebotsnummer sich beschränkt auf eine fortlaufende Seriennummer ohne Angebotsstatus, wie zum Beispiel '89475'. In einer weiteren Ausführung der Erfindung, kann man sich vorstellen, dass der Angebotsstatus 'zu verkaufen' oder 'zu vermieten' bereits verschlüsselt ist in den Kontaktangaben des Dienstanbieters, insbesondere im Firmennamen bzw. im Firmenlogo des Dienstanbieters, als Beispiel sei genannt firmaxverkauf.ch oder firmazvermietung.ch. In einer Weiterbildung der Erfindung kann man sich ebenfalls vorstellen, dass der genannte Informationsträger zudem mit einem integrierten RFID Transponder versehen ist.

Ein weiterer Vorteil der Erfindung liegt in den tiefen Herstellungskosten des Informationsträgers dank möglicher serienmässiger Herstellung in grossen Stückzahlen. Als Blickfang für den Interessenten zum Anbringen oder Aufkleben auf das Angebot kann der Informationsträger preisgünstig und unter gewissen Umständen sogar gratis an den Anbieter verteilt werden. Da die zugeteilten Angebotsnummern fortlaufende Seriennummern sind, zum Beispiel '000001' bis '999999' oder `verkauf000001' bis 'verkauf999999', kann der Informationsträger durch den Dienstanbieter im voraus und in grösseren Stückzahlen in verschiedenen Formaten hergestellt und bereitgestellt werden um in chronologischen Reihenfolge, je nach eingegangenen Angeboten in der Datenbank dem einzelnen Angebot zugeteilt zu werden, um schliesslich an den einzelnen Anbieter verschickt zu werden damit dieser den Informationsträger auf dem von ihm angebotenen Objekt anbringen kann. Die zurzeit auf dem Markt erhältlichen Blickfange zum Verkauf oder zur Vermietung von Immobilien, Grundstücken oder zum Verkauf von Fahrzeugen in Form von Aufklebern, Stickern, Werbetafeln, Werbeplakaten, Werbeschildern, Magnettafeln usw., welche zumeist einzeln oder in kleineren Stückzahlen und meistens auf besondere Bestellung hin des Anbieters hergestellt werden, sind wegen den Einzelanfertigungskosten teuer und man kann davon ausgehen, dass der Anbieter oft wegen hohen Kosten, aber auch wegen längeren Lieferfristen von dieser Art von Werbung zurückschreckt. Daher löst die erfindungsgemässe Vorrichtung dieses Problem kosteneffizient und ermöglicht dem Anbieter zudem sein Angebot auf eine personalisierte Art schnell und ohne weiteren Umtriebe auf den Markt zu bringen. Durch eine leicht einprägsame und gut sichtbare Angebotsnummer am Orte des Angebots oder auf dem Angebot selbst, wird dem Interessenten ein direkter Zugriff auf die detaillierte Information des Angebotes mittels entsprechendem Endgerät über das Festnetz oder über das Mobilfunknetz in der Datenbank des Dienstanbieters ermöglicht.

Das erfindungsgemässe Verfahren sieht vor, dass der Anbieter frei von jeglicher personalbezogener Beihilfe des Dienstanbieters, die Information der genannten Art mit dem entsprechendem Endgerät via Festnetz oder übers Mobilfunknetz in die Datenbank des Dienstanbieters eintragen kann und ihm automatisch eine Angebotsnummer nach Beendigung der Datenerfassung für sein Angebot zugeteilt wird und er anschliessend ein für sein angebotenes Objekt bestimmter Informationsträger im benötigten Format zugesandt bekommt. In einer alternativen Ausführungsvariante kann man sich ebenfalls vorstellen, dass der Anbieter den Informationsträger direkt übers Internet vom Dienstanbieter her herunterladen kann und bei ihm zuhause ausdrucken kann und somit eine materielle Zusendung überflüssig wird.

Das erfindungsgemässe Verfahren sieht vor, dass der Interessent frei von personalbezogener Beihilfe des Dienstanbieters, die Information der genannten Art mit dem entsprechendem Endgerät via Festnetz oder übers Mobilfunknetz von der Datenbank des Dienstanbieters abfragen kann, oder gemäss einer Weiterbildung der Erfindung mit RFID Technologie, und dass er somit einen kostenlosen Zugriff erhält zur Information des Angebots durch Uebermittlug der Angebotsnummer, welche er vom Informationsträger vor Ort oder auf dem Objekt ablesen kann und falls er es erwünscht, einen kostenpflichtigen Zugriff zu den Kontaktangaben des Anbieters erhält.

Dank einer solchen interaktiven Informationsvermittlung beschränken sich die Betriebskosten des Dienstanbieters vorteilhafterweise auf ein weitgehend durch den Anbieter und den Interessenten selbst getragenes Informationssystem, das durch den Dienstanbieter mit einem beschränkten Personalaufwand betrieben werden kann und somit preiswerte Dienstleistungen an den Anbieter wie auch an den Interessenten ermöglicht. Ein genanntes Ziel der Erfindung ist es ein weitverbreitetes Medium zur Vermittlung von Information über ein Angebot an einen Interessenten zu werden und die an die Anbieter verteilten und am Ort oder auf dem Objekt angebrachten Informationsträger ebenfalls aktiv zur Eigenwerbung des Dienstanbieters beitragen und dessen Bekanntheitsgrad im Markt fortwährend stärken.

Weitere Merkmale und Vorteile der Erfindung ergeben sich aus den Ansprüchen und der nachfolgenden Beschreibung der Erfindung anhand zweier Ausführungsbeispiele. In der Zeichnung zeigen die Figuren :
Fig.1 und Fig.1.1 zeigt eine skizzierte Darstellung des ersten Ausführungsbeispiels mit einem Verfahren zur Vermittlung von Information über ein Angebot an einen Interessenten sowie einer Vorrichtung zum Verkauf oder zur Vermietung von Grundstücken oder Immobilien.
Fig. 2 und Fig.2.1 zeigt eine skizzierte Darstellung des zweiten Ausführungsbeispiels mit einem Verfahren zur Vermittlung von Information über ein Angebot an einen Interessenten und einer Vorrichtung zum Verkauf von Fahrzeugen mittels RFID ldentiflkationstechnik.

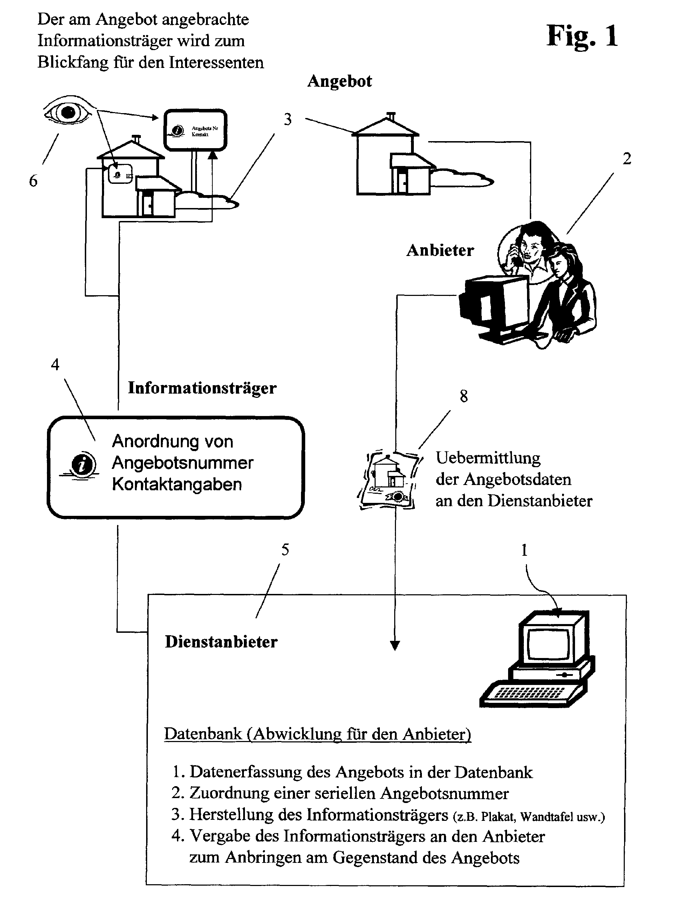

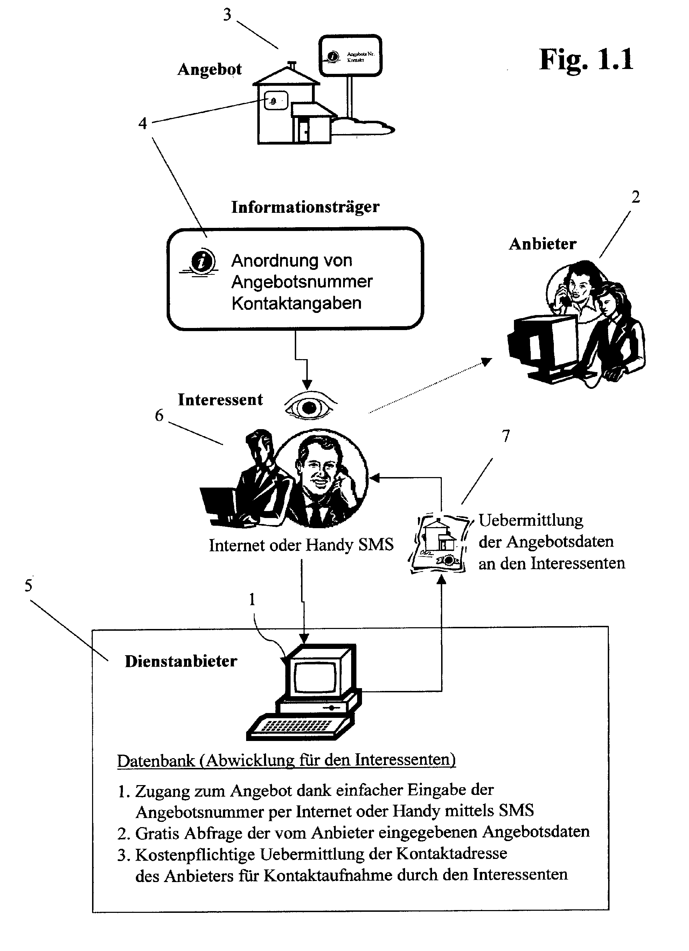

In einem ersten Ausführungsbeispiel zeigt Fig. 1 und 1.1 einen Anbieter 2 mit entsprechendem Endgerät mit Zugang zum Festnetz oder Mobilfunknetz, einen Dienstanbieter 5 mit entsprechender Telekommunikationseinrichtung und zugreifbaren Endgeräten und Datenbank 1, ein Angebot 3, in unserem Ausführungsbeispiel handelt es sich um ein Grundstück oder eine lmmobilie, ein dem Angebot 3 mit zugeordnetem Informationsträger 4, sowie ein Interessent 6 mit entsprechendem Endgerät mit Zugang zum Festnetz oder Mobilfunknetz. Mit Anbieter 2, Interessent 6 und Dienstanbieter 5 sind hier insbesondere auch deren Endgeräte gemeint. Der Anbieter 2 will sein Objekt zum Verkauf oder zum Vermieten nach besagter Art auf den Markt bringen, wobei sein Angebot 3 grundsätzlich eine lmmobilie, oder ein Grundstück ist. Der Anbieter 2 wendet sich hiefür an den Dienstanbieter 5. Dies kann grundsätzlich mit den heutzutage bestens bekannten Endgeräten wie dem Personal Computer, Laptop, oder Notebook über das Festnetz von zu hause aus oder von sonstwoher erfolgen, indem sich der Anbieter 2 auf die Internetseite des Anbieters 5 aufschaltet. Es kann aber auch mit einem Mobilfunkendgerät, dem sogenannten Handy mit SIM-Karte, mittels GSM, UMTS oder einem PDA erfolgen. Der Anbieter 2 geht auf die Datenbank 1 des Dienstanbieters 5 und folgt dort den Anweisungen des Computer Programms. Die Datenbank 1 sieht für den Anbieter 2 vor, dass dieser frei von personalbezogener Beihilfe des Dienstanbieters 5, die Information über sein Angebot 3 selber in die Datenbank 1 eingeben kann. Der Anbieter 2 führt die Uebermittlung der Angebotsdaten 8 an den Dienstanbieter durch. Nach Beendigung der Datenerfassung des Angebots 3 in der Datenbank 1 wird dem Anbieter 2 eine Angebotsnummer sowie ein Informationsträger 4 im gewünschten Format zugeteilt und die soeben getätigte Bestellung wird dem Anbieter 2 verrechnet. Dies kann online durch einen Zahlungsmodus wie im e-business üblich, mittels Kreditkarte oder durch Belastung einer Telefonnummer geschehen. Abschliessend wird dem Anbieter 2 der für sein Angebot 3 bestimmte Informationsträger 4 im festgelegten Format zugeschickt. In einer alternativen Ausgangsform kann man sich ebenfalls vorstellen, dass der Anbieter 2 den Informationsträger 4 direkt übers Internet herunterladet und bei ihm ausdrucken kann und somit eine materielle Warenzusendung durch die Post oder durch einen sonstigen Kurierdienst überflüssig wird, was die Kosten des Dienstanbieters 5 dementsprechend senkt und somit auch die dem Anbieter 2 verrechneten Gebühren entsprechend billiger macht. Der Anbieter 2 ist im Besitze des Informationsträger 4, welchen er als sogenannten Blickfang für den Interessenten 6 am Ort des Angebots 3, zum Beispiel auf seinem Grundstück, oder auf dem Angebot 3 selbst, zum Beispiel auf der Fassade seiner lmmobilie anbringen kann. Der Informationsträger 4 kann die Form eines bisher bekannten Blickfangs haben, wie zum Beispiel eine Werbetafel oder ein Werbeplakat, ist aber nur mit einer Anzeigeordnung versehen bestehend aus einer Angebotsnummer und den Kontaktangaben des Dienstanbieters. Wobei zu bemerken ist, dass die Kontaktangaben des Dienstanbierters einen Firmennamen, Internet-Domain Namen, Telefonnummer oder ein Firmenlogo beinhalten können. Gegenüber bisher bekannten Blickfangen kommt der Informationsträger ohne die platzraubende Beschriftung 'zu verkaufen' oder 'zu vermieten' aus und es wird damit mehr Platz geschaffen für eine gut erkennbare Anzeigeordnung für die Angebotsnummer und die Kontaktangaben des Dienstanbieters. Auf dem Informationsträger 4 befindet sich eine Angebotsnummer, die aus einer fortlaufenden Seriennummer zum Beispiel '89474' besteht, die angebunden ist an einen kodierten Angebotsstatus zum Beispiel 'verkauf, was dann zum Beispiel ein 'verkauf89474' als komplette serielle Angebotsnummer ergibt, was dem Interessenten 6 genügend Aufschluss gibt zu wissen ob es sich um einen Verkauf oder um eine Vermietung des Angebots 3 handelt. In einer anderen Ausführungsvariante der Erfindung kann man sich aber auch vorstellen, dass die serielle Angebotsnummer nur aus einer fortlaufenden Seriennummer besteht, wie zum Beispiel '89475'. Es ist klar, dass dann die vorgängig erklärte Ausführung keine Anwendung mehr findet, da im bereits erwähnten Firmennamen, Internet-Domain Namen, oder Firmenlogo in den Kontaktangaben des Dienstanbieters der Angebotsstatus bereits eingeschlossen ist, wie zum Beispiel 'firmaxverkauf.ch' oder 'firmazvermietung.ch'. Der Hinweis für den Interessenten 6 zu wissen, ob es sich um einen Verkauf oder eine Vermietung handelt, ist in dieser zweiten Ausführungsmöglichkeit ebenfalls gewährleistet. Dank der serienmässigen Herstellung in grossen Stückzahlen liegen die Herstellungskosten des Informationsträger 4 tief und somit kann er als Blickfang für den Interessenten 6 günstig und unter gewissen Umständen sogar kostenlos an den Anbieter 2 verteilt werden. Da die zugeteilte Angebotsnummer eine fortlaufende Seriennummer ist, kann der Informationsträger 4 durch den Dienstanbieter 5 lange im voraus in grösseren Mengen und in verschiedenen Formaten hergestellt und für die künftigen Anbieter 2 bereitgestellt werden. Sobald der Anbieter 2 einen Interessenten 6 gefunden hat, der sein Angebot 3 gekauft hat oder kaufen wird, meldet dies der Anbieter 2 dem Dienstanbieter 5 für eine sofortige Abmeldung oder Löschung des Angebots 3 in der Datenbank 1. Da die Eintragung des Angebots 3 in der Datenbank 1 zeitlich befristet ist, also zum Beispiel das Angebot 3 durch den Anbieter 2 während vier Wochen in der Datenbank 1 aufgeschaltet werden kann, geschieht dies auch spätestens nach Ablauf der zwischen dem Anbieter 3 und dem Dienstanbieter 5 vereinbarten Aufschaltungsdauer automatisch. Auch sollte der Anbieter 2 den Informationsträger 4 vom Gegenstand des Angebots 3 entfernen um weitere Interessenten 6 fernzuhalten. Will der Anbieter 2 nach Ablauf der zwischen Anbieter 3 und Dienstanbieter 5 vereinbarten Aufschaltungsdauer sein Angebot 3 weiterhin aufrechterhalten, da sein Angebot 3 noch keinen Käufer bzw. keinen Mieter gefunden hat, so muss der Anbieter 2 jeweils eine Verlängerung des Angebots 3 in der Datenbank 1 aufschalten und hiefür gegebenfalls eine Verlängerungsgebühr entrichten. Im Gegensatz zum Anbieter 2, der ein Angebot 3 zum Verkauf oder zur Vermietung anbietet, möchte der Interessent 6 ein Objekt kaufen oder mieten und hält Ausschau nach einem entsprechenden Angebot 3, wobei das von ihm gesuchte Angebot 3 eine lmmobilie oder ein Grundstück ist. Wie es im alltäglichen Leben häufig geschieht, wird das Interesse des Interessenten 6 geweckt durch Erblicken eines ihm entsprechenden Objektes. Tatsächlich hält der Interessent 6 aktiv Ausschau nach dem Objekt, welches er gerne kaufen oder mieten möchte. Und diese Verhaltensweise des Menschen bringt den Informationsträger 4 zum Tragen. Der Interessent 6 erblickt am Orte des Angebots 3, beispielsweise auf einem Grundstück, oder auf dem gesuchten Angebot 3, beispielsweise an der Fassade einer lmmobilie, den Informationsträger 4. Im Gegensatz zu den herkömmlichen auf dem Markt erhältlichen Blickfangen enthält der erfindungsgemässe Informationsträger 4 weder die platzeinnehmende Beschriftung 'zu verkaufen' noch 'zu vermieten', sondern lediglich die Anzeigeordnung bestehend aus der Angebotsnummer und den Kontaktangaben des Dienstanbieters. Die auf dem Informationsträger 4 aufgeführte Angebotsnummer steht in direktem Zusammenhang mit der Datenbank 1 des Dienstanbieters 5. Der Intereressent 6 prägt sich die Angebotsnummer des Angebots 3 ein und wählt mittels entsprechendem Endgerät über das Festnetz oder über das Mobilfunknetz die Kontaktadresse des Dienstanbieters an, welche auf dem Informationsträger 4 vermerkt ist. Der Interessent 6 erhält Zugang auf die Datenbank 1 und folgt dort den Anweisungen des Computer Programms. Die Datenbank 1 sieht für den Interessenten 6 vor, dass er frei von personalbedingter Beihilfe des Dienstanbieters 5, die Information über ein Angebot 3 von der Datenbank 1 abfragen kann. Der Interessent 6 führt die Abfrage durch Uebermittlung der Angebotsdaten 7 an den Interessenten durch. Bei der Informationsabfrage des Angebots 3 stehen dem Interessenten 6 zwei Optionen offen : a) der Inhalt der Abfrage über ein bestimmtes Angebot 3 entspricht nicht seinen Erwartungen, beispielsweise der Verkaufspreis des besichtigten Grundstückes ist ihm zu teuer, oder die Grundfläche ist ihm zu klein. Der Interessent 6 sieht somit von diesem Angebot 3 ab und kann sich einem anderen Angebot 3 widmen. Bei dieser Option entfallen für ihn jegliche Kosten oder Gebühren, da diese Dienstleistung vom Dienstanbieter 5 kostenlos angeboten wird. Der Vorteil für den Interessenten 6 liegt darin, dass solange er sich für kein bestimmtes Angebot 3 entscheiden kann, er kostenlos Angebote 3 in der Datenbank 1 abrufen und durchgehen kann. Bei der ersten Option erhält der Interessent 6 hingegen keine Angaben über den Anbieter 2 und kann somit nicht wissen, wer der wirkliche Verkäufer oder Vermieter des Angebots 3 ist.
b) der Inhalt der Abfrage über ein bestimmtes Angebot 3 entspricht den Erwartungen des Interessenten 6 und er möchte nun in Kontakt treten mit dem Anbieter 3. Bei dieser zweiten Option ruft der Interessent 6 in der Datenbank 1 die gebührenpflichtigen Kontaktangaben des Anbieters 2 ab. Die kostenpflichtige Abfrage wird ihm direkt online über einen Zahlungsmodus wie beispielsweise per Kreditkarte oder Belastung einer Telefonnummer direkt belastet. Abschliessend wird ihm die komplette Information des Angebots 3 inklusive Kontaktangaben des Anbieters, zum Beispiel in Form eines emails oder einer SMS-Kurznachricht zugesandt. In weiteren denkbaren Ausführungen kann man sich erfindungsgemäss ebenfalls vorstellen, dass das Angebot 3 den Verkauf von Fahrzeugen, oder anderen Objekten oder Gegenständen beinhaltet. In einer weiteren Ausführungsform kann man sich ebenfalls vorstellen, dass der Interessent 6 einen kostenpflichtigen Suchauftrag an den Dienstanbieter 5 aufgibt. Mit diesem Auftrag beauftragt der Interessent 6 den Dienstanbieter 5, gemäss seinen erwünschten Suchkriterien nach einem entsprechenden Angebot 3 zu suchen. Sollte ein solches Angebot 3 später in der Datenbank 1 verfügbar sein, so würde der Interessent 6 umgehend durch eine SMS-Kurznachricht oder durch ein email durch den Dientsanbieter 5 davon in Kenntnis gesetzt werden und er würde die Angaben zu einem sofortigen Zugang zur detaillierten Angebotsinformation erhalten.

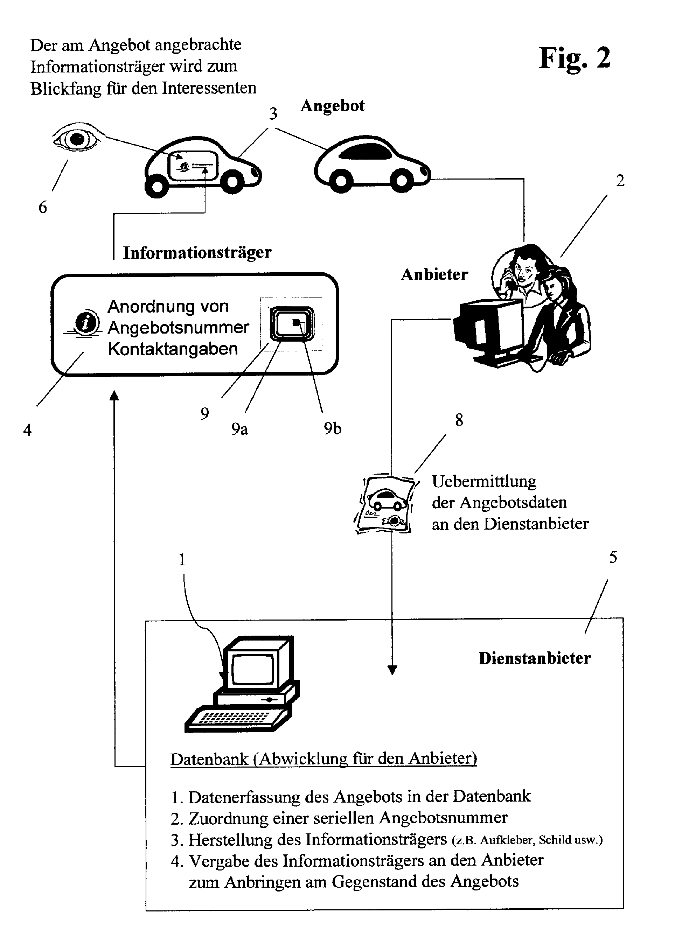

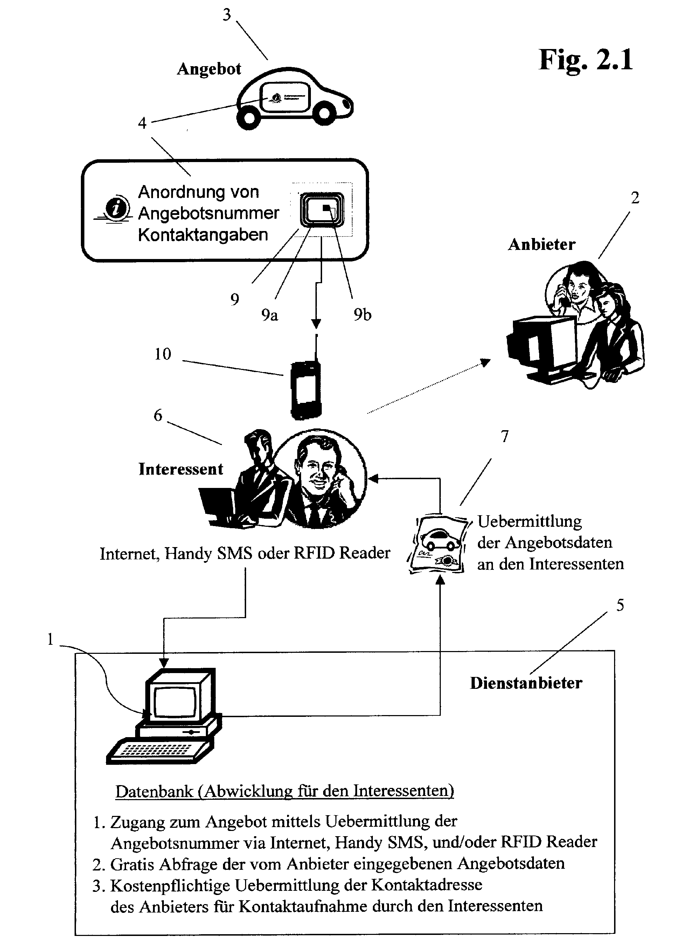

In einem zweiten Ausführungsbeispiel zeigt Fig. 2 und 2.1 einen Anbieter 2 mit entsprechendem Endgerät mit Zugang zum Festnetz oder Mobilfunknetz, einen Dienstanbieter 5 mit entsprechender Telekommunikationseinrichtung und RFID-ldentifikationstechnik, sowie zugreifbaren Endgeräten und Datenbank 1, ein Angebot 3, in unserem Ausführungsbeispiel handelt es sich um den Verkauf eines Fahrzeugs, ein dem Angebot zugeordneter Informationsträger 4 mit integriertem Transponder 9, sowie ein Interessent 6 mit entsprechendem Endgerät mit Zugang zum Festnetz oder Mobilfunknetz wie auch einem Lese/Schreibgerät 10 zum Lesen von RFID-Transpondern 9. Mit Anbieter 2, Interessent 6 und Dienstanbieter 5 sind hier insbesondere auch deren Endgeräte gemeint. Der Anbieter 2 will sein Fahrzeug zum Verkauf nach besagter Art auf den Markt bringen. Der Anbieter 2 wendet sich an den Dienstanbieter 5 in der gleichen Weise, wie dies bereits im ersten Ausführungsbeispiel eingehend dargelegt wurde, mit dem Unterschied, dass der Informationsträger 4 in diesem Ausführungsbeispiel nebst der bestehenden Anzeigeordnung aus einer seriellen Angebotsnummer und den Kontaktangaben des Dienstanbieters, zusätzlich auf einen im Informationsträger 4 integrierten Transponder 9 zurückgreifen kann. Dieser Transponder 9, bestehend aus einer Antenne 9a und einem Chip 9b auf welchem mindestens die Angebotsnummer gespeichert ist, bedient sich der RFID Identifikationstechnologie welche nachfolgend noch ausführlich beschrieben wird, und soll dem Interessenten 6 einen Vorteil bringen. Der Interessent 6 möchte ein Objekt kaufen, wobei das von ihm gesuchte Angebot 3 ein Fahrzeug ist. Der Interessent 6 geht in der gleichen Weise vor, wie dies bereits im ersten Ausführungsbeispiel eingehend erläutert wurde, mit dem Unterschied, dass er nun zusätzlich über einen im Informationsträger 4 integrierten RFID-Transponder 9 zur Uebermittlung von Information verfügt. Der Tranponder 9 bietet dem Interessenten 6 mindestens die Möglichkeit zu einer drahtlosen Uebermittlung der Angebotsnummer an die Datenbank 1 des Dienstanbieters 5. Bei der RFID-Technik handelt es sich um eine ldentifikatiionstechnik, die auf der drahtlosen Uebertragung von Daten zwischen einem Transponder 9 (Datenträger) und einem Lese/Schreibgerät 10 (Empfänger) basiert. Die Vorteile der Transponder gegenüber anderen ldentifikationstechniken liegen in der Funkverbindung zwischen Lese/Schreibgerät 10 und Transponder 9. Das Lese/Schreibgerät 10 benötigt keinen optischen Kontakt zum Transponder 9. Dies ermöglicht es, den Transponder 9 vollkommen in den Informationsträger 4 zu integrieren. Der Transponder 9 ist sehr zuverlässig und billig und ist unempfindlich gegen Nässe, Verschmutzung und mechanische Einflüsse, zudem bietet der Transponder 9 eine extrem hohe Lesesicherheit, eine schnellere Datenerfassung und eine zigfache Nutzung der Datenträger, durch immer neue Daten die auf dem Transponder 9 gegen die alten Daten ausgetauscht werden können. All dies sind Vorteile, die den Transponder 9 zu einem idealen und evolutiven Datenträger machen, welcher einfach und sehr kostengünstig in den erfindungsgemässen Informationsträger 4 integriert werden kann. Der Vorteil für den Interessenten 6 liegt darin, dass der Informationsträger 4, welchen er bei gewecktem Interesse auf dem Angebot 3 erblickt, nebst der Anzeigeordnung bestehend aus einer Angebotsnummer und den Kontaktangaben des Dienstanbieters, nun auch noch über einen integrierten Transponder 9 als drahtloser Informationsübermittlungsvektor verfügt. Wie die auf dem Informationsträger 4 aufgeführte Angebotsnummer, steht auch der Transponder 9 in direktem Zusammenhang mit der Datenbank 1 des Dienstanbieters 5. Ist der Intereressent 6 im Besitze eines RFID-Lese/Schreibgerät 10, welches idealerweise ein mobiles Handgerät sein sollte, kann er es sobald er in unmittelbarer Reichweite des Informationsträgers 4 ist, betätigen. Das Lese/Schreibgerät 10 sendet einen elektromagnetischen Impuls an die Antenne 9a des Transponders 9. Der Chip 9b des Transponders 9 empfängt die Impulse, wertet sie aus, und sendet seine gespeicherten Daten, zum Beispiel die Angebotsnummer des Angebots, als Antwort zurück. Gegebenfalls ersetzt er die bestehenden Daten auch durch neuen Daten, die durch das Lese/Schreibgerät 10 übermittelt wurden. Dabei nutzt er die elektromagnetischen Schwingungen der Antenne 9a als Energiequelle. Die Daten werden dann entweder im Lese/Schreibgerät 10 gespeichert und zuhause oder sonstwo auf dem Computer abgelesen, um dann zum Beispiel via Internet an die Datenbank 1 des Dienstanbieters 5 weitergeleitet zu werden, oder mit entsprechendem Endgerät direkt per GSM oder Wireless Lan an die Datenbank 1 des Dienstanbieters 5 übermittelt. Somit muss sich der Interessent 6 weder noch um die Angebotsnummer, noch um die Kontaktangaben des Dienstanbieters kümmern, da der drahtlose Dialog zwischen den verschieden Geräten und Datenträgern ohne menschliche Hand vonstatten geht. In weiteren denkbaren Ausführungen kann man sich erfindungsgemäss ebenfalls vorstellen, dass das Angebot 3 den Verkauf oder die Vermietung von Grundstücken oder Immobilien, oder anderen Objekten oder Gegenständen beinhaltet. In der nächsten Zukunft kann man auch mit sehr grosser Wahrscheinlichkeit davon ausgehen, dass nicht nur vereinzelte, sondern die meisten mobilen Geräte wie zum Beispiel Handys, PDA usw. mit RFID-Transpondern und anderen Geräten kommunizieren werden (dank zum Beispiel Bluetooth Technologie) und die ausgetauschten Daten entweder speichern, oder direkt per GSM oder Wireless Lan an einen zentralen Rechner, an die Datenbank 1 oder an weitere Geräte übermitteln können. Die RFID-Technik bietet somit für die vorliegende Erfindung unzählige Ausführungs- und Anwendungsmöglichkeiten, welche hier verständlicherweise aus Platzgründen nicht alle dargelegt werden können und daher sind die beiden dargelegten Ausführungsbeispiele nicht abschliessend und weitere Ausführungsformen sind erfindungsgemäss vorstellbar.

## Patentansprüche

1. Verfahren zur Vermittlung von Information über ein Angebot an einen Interessenten **dadurch gekennzeichnet, dass** ein am Ort des Angebots oder ein auf dem Angebot angebrachter Informationsträger ausgebildet ist mit den Kontaktangaben des Dienstanbieters und einer Angebotsnummer die mit einer vom Dienstanbieter betriebenen Datenbank in Zusammenhang steht und durch ein ans Telekommunikationsnetz angeschlossenes Endgerät dem Interessenten direkten Zugang zur Information über das Angebot in der Datenbank des Dienstanbieters ermöglicht, Information welche vorgängig durch den Anbieter mit einem an das Telekommunikationsnetz angeschlossenes Endgerät in die Datenbank des Dienstanbieters eingegeben wird zur Abfrage durch den Interessenten.

2. Verfahren nach Anspruch 1, **dadurch gekennzeichnet, dass** das vom Interessenten zur Abfrage von Information über ein Angebot, beziehungsweise das vom Anbieter zur Eingabe von Information über ein Angebot benützte Endgerät ein über das Festnetz betriebener Computer mit Internetzugang ist, oder ein über das Mobilfunknetz betriebenes Mobilfunkendgerät ist mit Uebermittlungs- und Abfragemöglichkeit per Mobilfunkkurznachricht mittels GSM, SMS oder WAP-Protokoll, und gegebenfalls eine SIM-Karte beinhaltet gemäss GSM oder UMTS.

3. Verfahren nach Anspruch 1, **dadurch gekennzeichnet, dass** das vom Interessenten zur Abfrage von Information über ein Angebot benützte Endgerät eine Wechselsprecheinrichtung ist, welche über das Festnetz oder das Mobilfunknetz durch Tastendruck eine Zielwahl auf der vom Dienstanbieter betriebenen Datenbank ermöglicht mittels eines auf dem Computer des Dienstanbieters laufenden Programms zur interaktiven Informationsvermittlung mit Sprachausgabe.

4. Verfahren nach einem der vorhergehenden Ansprüche, **dadurch gekennzeichnet, dass** die Angebotsnummer aus einer fortlaufenden Seriennummer besteht.

5. Verfahren nach einem der vorhergehenden Ansprüche, **dadurch gekennzeichnet, dass** die Angebotsnummer verschlüsselt ist mit einer fortlaufenden Seriennummer und einem Angebotsstatus der dem Interessenten beim Lesen der Angebotsnummer Aufschluss darüber gibt ob es sich um einen Verkauf oder um eine Vermietung des Angebots handelt.

6. Verfahren nach einem der vorhergehenden Ansprüche, **dadurch gekennzeichnet, dass** der Angebotsstatus 'zu verkaufen' oder 'zu vermieten' kodifiziert ist in den Kontaktangaben des Dienstanbieters, insbesondere im Firmennamen, im Internet Domain-Namen, oder im Firmenlogo des Dienstanbieters.

7. Verfahren nach einem der vorhergehenden Ansprüche, **dadurch gekennzeichnet, dass** die Vermittlung von Information über ein Angebot an einen Interessenten den Verkauf oder die Vermietung von Immobilien oder Grundstücken, oder den Verkauf von Fahrzeugen betrifft.

8. Verfahren nach einem der vorhergehenden Ansprüche, **dadurch gekennzeichnet, dass** ein am Ort des Angebots oder ein auf dem Angebot angebrachter Informationsträger einen auf der RFID-ldentifikationstechnik basierenden Transponder enthält bestehend aus einer Antenne und einem Chip in welchem mindestens eine Angebotsnummer gespeichert ist, die mit der vom Dienstanbieter betriebenen Datenbank in Zusammenhang steht, wobei der genannte Tranponder dem Interessenten mit entsprechendem RFID Lese/Schreibgerät mindestens den Vorteil einer drahtlosen Uebermittlung der Angebotsnummer an die Datenbank des Dienstanbieters oder an ein sonstiges Endgerät oder Datenträger bringt.

9. Vorrichtung zur Vermittlung von Information über ein Angebot an einen Interessenten **dadurch gekennzeichnet, dass** ein am Ort des Angebots oder ein auf dem Angebot angebrachter Informationsträger ausgebildet ist mit den Kontaktangaben des Dienstanbieters und einer Angebotsnummer die mit einer vom Dienstanbieter betriebenen Datenbank in Zusammenhang steht und durch ein ans Telekommunikationsnetz angeschlossenes Endgerät dem Interessenten direkten Zugang zur Information über das Angebot in der Datenbank des Dienstanbieters ermöglicht, Information welche vorgängig durch den Anbieter mit einem an das Telekommunikationsnetz angeschlossenes Endgerät in die Datenbank des Dienstanbieters eingegeben wird zur Abfrage durch den Interessenten.

10. Vorrichtung nach Anspruch 9, **dadurch gekennzeichnet, dass** das vom Interessenten zur Abfrage von Information über ein Angebot, beziehungsweise das vom Anbieter zur Eingabe von Information über ein Angebot benützte Endgerät ein über das Festnetz betriebener Computer mit Internetzugang ist, oder ein über das Mobilfunknetz betriebenes Mobilfunkendgerät ist mit Uebermittlungs- und Abfragemöglichkeit per Mobilfunkkurznachricht mittels GSM, SMS oder WAP-Protokoll, und gegebenfalls eine SIM-Karte beinhaltet gemäss GSM oder UMTS.

11. Vorrichtung nach Anspruch 9 oder 10, **dadurch gekennzeichnet, dass** der Informationsträger ausgebildet ist mit den Kontaktangaben des Dienstanbieters und mit einer Angebotsnummer welche entweder aus einer fortlaufenden Seriennummer besteht, oder verschlüsselt ist mit einer fortlaufenden Seriennummer und einem Angebotsstatus der dem Interessenten beim Lesen der Angebotsnummer Aufschluss darüber gibt ob es sich um einen Verkauf oder um eine Vermietung des Angebots handelt, oder dass der Angebotsstatus 'zu verkaufen' oder 'zu vermieten' kodifiziert ist in den Kontaktangaben des Dienstanbieters, insbesondere im Firmennamen, im Internet Domain-Namen, oder im Firmenlogo des Dienstanbieters.

12. Vorrichtung nach einem der vorhergehenden Ansprüche 9 bis 11, **dadurch gekennzeichnet, dass** der Informationsträger einen auf der RFID-ldentifikationstechnik basierenden Transponder enthält bestehend aus Antenne und Chip in welchem mindestens eine Angebotsnummer gespeichert ist, die mit der vom Dienstanbieter betriebenen Datenbank in Zusammenhang steht, wobei der genannte Tranponder dem Interessenten mit entsprechendem RFID Lese/Schreibgerät mindestens den Vorteil einer drahtlosen Uebermittlung der Angebotsnummer an die Datenbank des Dienstanbieters oder an ein sonstiges Endgerät oder Datenträger bringt.

13. Informationsträger, **dadurch gekennzeichnet, dass** er ausgebildet ist mit den Kontaktangaben des Dienstanbieters und einer Angebotsnummer die mit einer vom Dienstanbieter betriebenen Datenbank in Zusammenhang steht.

14. lnformationsträger nach Anspruch 13, **dadurch gekennzeichnet, dass** er die Form eines Aufklebers, Werbetafel, Werbeplakats, Werbeschilds, Hängetafel, Posters, oder Magnettafel hat und als Blickfang zum Verkauf oder zur Vermietung von Immobilien, Grundstücken oder zum Verkauf von Fahrzeugen bestimmt ist.

15. Informationsträger nach Anspruch 13 oder 14, **dadurch gekennzeichnet, dass** er einen auf der RFID-ldentifikationstechnik basierenden Transponder enthält aus Antenne und Chip in welchem mindestens eine Angebotsnummer gespeichert ist, die mit der vom Dienstanbieter betriebenen Datenbank in Zusammenhang steht.

16. Informationssystem, **dadurch gekennzeichnet, dass** der Anbieter frei von personenbezogener Beihilfe des Dienstanbieters, Information über ein Angebot mit einem entsprechenden Endgerät via Festnetz oder übers Mobilfunknetz in die Datenbank des Dienstanbieters eingeben kann und ihm eine Angebotsnummer sowie ein Informationsträger gegen Bezahlung zugeteilt wird, und dass der Interessent frei von personenbezogener Beihilfe des Dienstanbieters, Information über ein Angebot mit einem entsprechenden Endgerät via Festnetz oder übers Mobilfunknetz in der Datenbank des Dienstanbieters abfragen kann und somit kostenlosen Zugriff erhält zur Information des Angebots durch Uebermittlung der Angebotsnummer, welche er vorgängig vom Informationsträger am Orte des Angebots oder auf dem Angebot ablesen kann und falls er es wünscht, einen kostenpflichtigen Zugriff zu den Kontaktangaben des Anbieters erhält.
